(19) Europäisches Patentamt
European Patent Office
Office européen des brevets

(11) Veröffentlichungsnummer: **0 390 024 B1**

(12) **EUROPÄISCHE PATENTSCHRIFT**

(45) Veröffentlichungstag der Patentschrift: **08.06.94**

(51) Int. Cl.⁵: **C09B 29/039**, C09B 29/36, C09B 29/42, D06P 1/18

(21) Anmeldenummer: **90105690.3**

(22) Anmeldetag: **26.03.90**

Die Akte enthält technische Angaben, die nach dem Eingang der Anmeldung eingereicht wurden und die nicht in dieser Patentschrift enthalten sind.

(54) **Azofarbstoffe mit einer Diazokomponente aus der Aminobenzisothiazolreihe.**

(30) Priorität: **30.03.89 DE 3910289**

(43) Veröffentlichungstag der Anmeldung:
**03.10.90 Patentblatt 90/40**

(45) Bekanntmachung des Hinweises auf die Patenterteilung:
**08.06.94 Patentblatt 94/23**

(84) Benannte Vertragsstaaten:
**CH DE FR GB IT LI**

(56) Entgegenhaltungen:
**DE-A- 2 727 383**
**FR-A- 2 394 585**

**M. Rolf, R. Neef "Neue hochechte organische Pigmente"; Dyes and Pigments (1984); 189-207**

(73) Patentinhaber: **BASF Aktiengesellschaft**
**Carl-Bosch-Strasse 38**
**D-67063 Ludwigshafen(DE)**

(72) Erfinder: **Hansen, Guenter, Dr.**
**Alwin-Mittasch-Platz 8**
**D-6700 Ludwigshafen(DE)**
Erfinder: **Hagen, Helmut, Dr.**
**Max-Slevogt-Strasse 17e**
**D-6710 Frankenthal(DE)**
Erfinder: **Reichelt, Helmut, Dr.**
**Johann-Gottlieb-Fichte-Strasse 56**
**D-6730 Neustadt(DE)**

**EP 0 390 024 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Benzisothiazolazofarbstoffe der Formel I

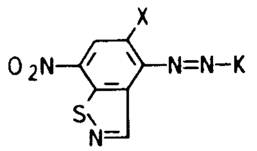

(I),

in der
X für Wasserstoff, Chlor, Brom, Cyano oder Nitro und K für einen Rest der Formel II oder III

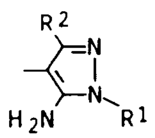

(II)

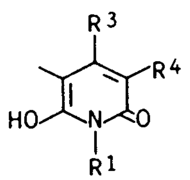

(III)

stehen, wobei

- $R^1$ gegebenenfalls substituiertes $C_1$-$C_{12}$-Alkyl, das durch ein oder mehrere Sauerstoffatome unterbrochen sein kann, gegebenenfalls substituiertes Phenyl, $C_3$-$C_5$-Alkenyl oder $C_5$-$C_7$-Cycloalkyl,
- $R^2$ Wasserstoff oder $C_1$-$C_4$-Alkyl,
- $R^3$ Wasserstoff oder Methyl und
- $R^4$ Wasserstoff, Cyano oder Carbamoyl bedeuten,

sowie ihre Verwendung zum Färben von synthetischen Fasermaterialien.

Aus der DE-A-2 727 383 sind bereits Azofarbstoffe bekannt, die eine Diazokomponente auf Basis von 4-Aminobenzisothiazol aufweisen und deren Kupplungskomponente ein Derivat von 6-Hydroxy-3-acetylpyrid-2-on darstellt.

Aufgabe der vorliegenden Erfindung war es, neue Azofarbstoffe bereitzustellen, deren Diazokomponente sich von 4-Amino-7-nitrobenzisothiazolderivaten ableitet und die ein günstiges anwendungstechnisches Eigenschaftsprofil besitzen.

Demgemäß wurden die eingangs näher bezeichneten Benzisothiazolazofarbstoffe der Formel I gefunden.

Alle in der obengenannten Formel I auftretenden Alkylgruppen können sowohl geradkettig als auch verzweigt sein.

Wenn in der obengenannten Formel I substituierte Phenylreste auftreten, können als Substituenten z.B. $C_1$-$C_4$-Alkyl, $C_1$-$C_4$-Alkoxy, Cyano, Fluor, Chlor, Brom oder Nitro in Betracht kommen.

Wenn in der obengenannten Formel I substituierte Alkylreste auftreten, können als Substituenten, z.B. Hydroxy, $C_5$-$C_7$-Cycloalkoxy, Phenoxy, $C_1$-$C_4$-Alkoxycarbonyl, Cyano, $C_1$-$C_8$-Alkanoyloxy, Benzoyloxy, Phenyl, Furyl oder Thienyl in Betracht kommen.

Wenn in der obengenannten Formel I Alkylreste auftreten, die durch ein oder mehrere Sauerstoffatome unterbrochen sind, sind solche bevorzugt, die durch 1 bis 3, insbesondere 1 bis 2 Sauerstoffatome unterbrochen sind.

Reste $R^1$ und $R^2$ sind z.B. Methyl, Ethyl, Propyl, Isopropyl, Butyl, Isobutyl oder sec-Butyl.

Reste $R^1$ sind weiterhin z.B. Pentyl, Isopentyl, Neopentyl, tert-Pentyl, Hexyl, Heptyl, Octyl, 2-Ethylhexyl, Isooctyl, Nonyl, Isononyl, Decyl, Isodecyl, Undecyl, Dodecyl (Die Bezeichnungen Isooctyl, Isononyl und Isodecyl sind Trivialbezeichnungen und stammen von den nach der Oxosynthese erhaltenen Alkoholen - vgl. Ullmanns Enzyklopädie der technischen Chemie, 4. Auflage, Band 7, Seiten 215 bis 217, sowie Band 11, Seiten 435 und 436), 2-Methoxyethyl, 2-Ethoxyethyl, 2-Propoxyethyl, 2-Butoxyethyl, 2-(2-Ethylhexyloxy)-ethyl, 2-Methoxypropyl, 3-Methoxypropyl, 3-Ethoxypropyl, 3-(2-Ethylhexyloxy)propyl, 2-Methoxybutyl, 4-Methoxybutyl, 2-Ethoxybutyl, 4-Ethoxybutyl, 3,6-Dioxaheptyl, 3,6-Dioxaoctyl, 4,7-Dioxaoctyl, 4,7-Dioxanonyl, 3,6-Dioxadecyl, 4,9-Dioxatridecyl, Benzyl, 1- oder 2-Phenylethyl, 8-Phenyl-4,7-dioxaoctyl, 2-Cyanoethyl, 3-Cyanopropyl, 4-Cyanobutyl, 5-Cyano-3-oxapentyl, 6-Cyano-4-oxahexyl,8-Cyano-4-oxahexyl, 2-Hydroxyethyl, 2- oder 3-Hydroxypropyl, 2,3-Dihydroxypropyl, 2-Hydroxybutyl, 4-Hydroxybutyl, 5-Hydroxy-3-oxapentyl, 6-Hydroxy-4-oxahexyl, 8-Hydroxy-4-oxaoctyl, 8-Hydroxy-3,6-dioxaoctyl, 2-Phenyl-2-hydroxyethyl, 2-Chlorethyl, 2-Bromethyl, 2-Phenoxyethyl, 3-Phenoxypropyl, 4-Phenoxybutyl, 5-Phenoxy-3-oxapentyl, 6-Phenoxy-4-oxahexyl, 8-Phenoxy-4-oxaoctyl, 2-Cyclohexyloxyethyl, 3-Cyclohexyloxypropyl, 4-Cyclohexyloxybutyl, 5-Cyclohexyloxy-3-oxapentyl, 6-Cyclohexyloxy-4-oxahexyl, 8-Cyclohexyloxy-4-oxaoctyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonyl-3-oxapentyl, 6-Methoxycarbonyl-4-oxahexyl, 8-Methoxycarbonyl-4-oxaoctyl, 2-Formyloxyethyl, 2-Acetyloxyethyl, 2-Propionyloxyethyl, 2-Butyryloxyethyl, 2-(2-Ethylhexanoyloxy)ethyl, 2- oder 3-Acetyloxypropyl, 2- oder 3-Propionyloxypropyl, 2- oder 3-(2-Ethylhexanoyloxy)propyl, 4-Acetyloxybutyl, 4-Propionyloxybutyl, 4-(2-Ethylhexanoyloxy)butyl, 5-Acetyloxy-3-oxapentyl, 5-Propionyloxy-3-oxapentyl, 5-(2-Ethylhexanoyloxy)-3-oxapentyl, 6-Acetyloxy-4-oxahexyl, 6-Propionyloxy-4-oxaoctyl, 6-(2-Ethylhexanoyloxy)-4-oxahexyl, 8-Acetyloxy-4-oxaoctyl, 8-Propionyloxy-4-oxaoctyl, 8-(2-Ethylhexanoyloxy)-4-oxaoctyl, 2-Benzoyloxyethyl, 2- oder 3-Benzoyloxy-4-oxahexyl, 8-Benzoyloxy-4-oxaoctyl, Cyclopentyl, Cyclohexyl, Cycloheptyl, Phenyl, 2-Methylphenyl, 4-Methylphenyl, 2,6-Dimethylphenyl, 4-Isopropylphenyl, 2-Methoxyphenyl, 4-Methoxyphenyl, 2,4-Dimethoxyphenyl, 2-Ethoxyphenyl, 2-Chlorphenyl, 4-Chlorphenyl, 2,4-Dichlorphenyl, 4-Bromphenyl, Allyl, Methallyl oder Fur-2-ylmethyl.

Bevorzugt sind Benzisothiazolfarbstoffe der Formel I, in der X Wasserstoff, Chlor, Brom oder Cyano und $R^4$ Cyano bedeuten und $R^1$, $R^2$ und $R^3$ jeweils die obengenannte Bedeutung besitzen.

Besonders wertvoll sind Benzisothiazolazofarbstoffe der Formel I, in der X für Wasserstoff, Chlor, Brom oder Cyano und K für den Rest der Formel II stehen, wobei $R^2$ Wasserstoff oder Methyl bedeutet und $R^1$ die obengenannte Bedeutung besitzt.

Zur Herstellung der erfindungsgemäßen Benzisothiazolazofarbstoffe der Formel I kann man eine nach an sich bekannten Verfahren erhältliche Diazoniumverbindung von Aminen der Formel IV

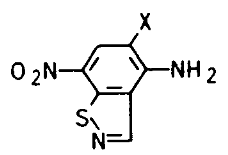

(IV),

in der X die obengenannte Bedeutung besitzt, mit Kupplungskomponenten der Formel IIa oder IIIa

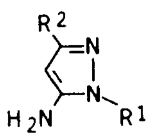

(IIa)

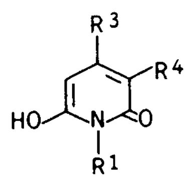

(IIIa),

wobei $R^1$, $R^2$, $R^3$ und $R^4$ jeweils die obengenannte Bedeutung besitzen, nach an sich bekannten Methoden umsetzen.

Weitere Einzelheiten der Herstellung können den Beispielen entnommen werden.

4-Amino-7-nitrobenzisothiazole der Formel IV sind an sich bekannt und beispielsweise in der DE-A-2 738 885, DE-A-2 727 383 sowie der DE-A-2 020 479 als Diazokomponenten beschrieben.

Die erfindungsgemäßen Farbstoffe sind gelb bis rot und zeichnen sich durch gute Lichtechtheit, Thermofixierechtheit sowie durch gutes Ziehvermögen aus. Sie eignen sich vorteilhaft zum Färben von synthetischen Fasermaterialien, wie Polyamide, Celluloseester oder Mischgewebe aus Polyestern und Cellulosefasern. Insbesondere sind sie zum Färben von synthetischen Polyestern geeignet.

Die folgenden Beispiele sollen die Erfindung näher erläutern. In den Beispielen beziehen sich Angaben über Prozente, sofern nicht anders vermerkt, auf das Gewicht.

Beispiel 1

5,5 g 4-Amino-5-cyano-7-nitrobenzisothiazol wurden in 13,5 ml 85 %ige Schwefelsäure und 7,5 ml Eisessig/Propionsäure (3:1 v/v) eingetragen. Bei 0 bis 5 °C wurden 8,6 g Nitrosylschwefelsäure (11,5 % $N_2O_3$) zugetropft und 4 Stunden bei 0 bis 5 °C gerührt.

Zu 4,5 g 5-Amino-1-benzylpyrazol, gelöst in 50 ml N,N-Dimethylformamid, 100 g Eis und 0,3 g Amidosulfonsäure wurde die oben hergestellte Diazoniumsalzlösung bei 0 °C unter Zugabe weiterer 300 g Eis zugetropft. Es wurde 4 Stunden bei 0 bis 5 °C gerührt, langsam auf Raumtemperatur erwärmt, abgesaugt und der Niederschlag gewaschen und getrocknet.

Ausbeute: 7,5 g des Farbstoffs der Formel

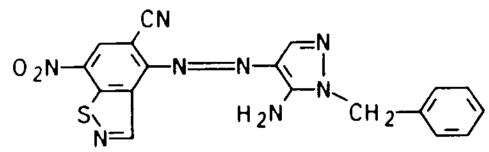

der Polyestermaterial in echten roten Tönen färbt ($\lambda_{max}$ [$CH_2Cl_2$]: 529 nm).

Beispiel 2

6,85 g 4-Amino-5-brom-7-nitrobenzisothiazol wurden analog Beispiel 1 diazotiert und mit 4,5 g 5-Amino-1-benzylpyrazol umgesetzt. Man erhielt 11,4 g des Farbstoffs der Formel

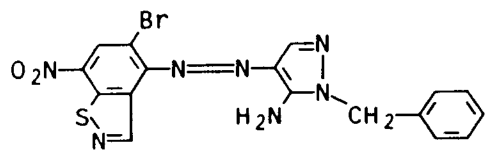

der Polyester in Licht- und thermofixierechten roten Tönen färbt ($\lambda_{max}$ [$CH_2Cl_2$]: 504 nm).

Beispiel 3

Man verfuhr wie in Beispiel 2 beschrieben, setzte jedoch anstelle von 5-Amino-1-benzylpyrazol 5,7 g 1-Butyl-3-cyano-6-hydroxy-4-methylpyrid-2-on ein. Man erhielt 12,0 g des Farbstoffes der Formel

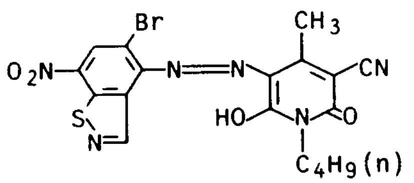

der Polyesterfasern in echten goldgelben Tönen färbt. ($\lambda_{max}$ [$CH_2Cl_2$]: 471 nm).

In analoger Weise werden die in den folgenden Tabellen 1 und 2 aufgeführten Farbstoffe erhalten.

Tabelle 1

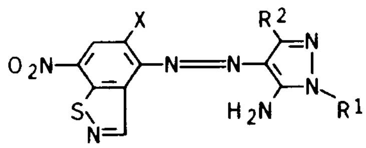

| Bsp.-Nr. | X | $R^1$ | $R^2$ | Farbton auf Polyester (PES) |
|---|---|---|---|---|
| 4 | CN | $C_6H_5$ | $CH_3$ | rot |
| 5 | CN | 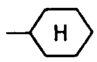 | H | rot |
| 6 | CN | $C_6H_5$ | H | rot |
| 7 | Cl | $CH_2C_6H_5$ | H | rot |
| 8 | Cl | 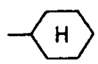 | H | rot |
| 9 | Br | $C_6H_5$ | $CH_3$ | rot |
| 10 | Br | $CH_3$ | H | rot |
| 11 | Br | $CH_2$ 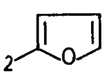 | H | rot |
| 12 | Br | $C_6H_5$ | H | rot |
| 13 | H | $CH_2C_6H_5$ | H | orange |
| 14 | H | $C_6H_5$ | $CH_3$ | orange |
| 15 | H | 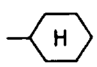 | H | orange |

Tabelle 2

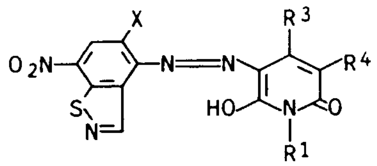

| Bsp.-Nr. | X | $R^1$ | $R^3$ | $R^4$ | Farbton auf PES |
|---|---|---|---|---|---|
| 16 | CN | $CH_3$ | $CH_3$ | CN | goldgelb |
| 17 | CN | $C_3H_6OCH_2C_6H_5$ | $CH_3$ | CN | goldgelb |
| 18 | CN | $C_6H_{13}$ | $CH_3$ | CN | goldgelb |
| 19 | Br | $C_3H_6OC_2H_4OC_6H_5$ | $CH_3$ | CN | goldgelb |
| 20 | Br | $C_3H_7$ | $CH_3$ | CN | goldgelb |
| 21 | Br | $CH_2CH_2(C_2H_5)C_4H_9$ | $CH_3$ | CN | goldgelb |
| 22 | Br | $C_2H_5$ | $CH_3$ | CN | goldgelb |
| 23 | Cl | $C_3H_6OCH_2C_6H_5$ | $CH_3$ | CN | goldgelb |
| 24 | H | $CH_3$ | $CH_3$ | CN | gelb |
| 25 | H | $C_4H_9$ | $CH_3$ | CN | gelb |
| 26 | H | $C_3H_6OC_2H_4OCH_3$ | $CH_3$ | CN | gelb |
| 27 | H | $C_3H_6OCH_2C_6H_5$ | $CH_3$ | CN | gelb |
| 28 | H | $C_6H_{13}$ | H | CN | gelb |
| 29 | Br | $C_2H_5$ | H | CN | goldgelb |
| 30 | Br | $CH_2CH(C_2H_5)C_4H_9$ | $CH_3$ | H | gelb |
| 31 | CN | $C_4H_9$ | $CH_3$ | H | gelb |
| 32 | Cl | $C_6H_{13}$ | $CH_3$ | $CONH_2$ | gelb |

## Patentansprüche

**1.** Benzisothiazolazofarbstoffe der Formel I

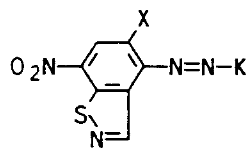

(I),

in der
X für Wasserstoff, Chlor, Brom, Cyano oder Nitro und K für einen Rest der Formel II oder III

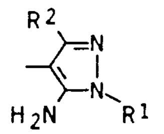

(II)

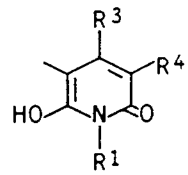

(III)

stehen, wobei

$R^1$ gegebenenfalls substituiertes $C_1$-$C_{12}$-Alkyl, das durch ein oder mehrere Sauerstoffatome unterbrochen sein kann, gegebenenfalls substituiertes Phenyl, $C_3$-$C_5$-Alkenyl oder $C_5$-$C_7$-Cycloalkyl,
$R^2$ Wasserstoff oder $C_1$-$C_4$-Alkyl,
$R^3$ Wasserstoff oder Methyl und
$R^4$ Wasserstoff, Cyano oder Carbamoyl bedeuten.

**2.** Benzisothiazolazofarbstoffe gemäß Anspruch 1, dadurch gekennzeichnet, daß X Wasserstoff, Chlor, Brom oder Cyano und $R^4$ Cyano bedeuten und $R^1$, $R^2$ und $R^3$ jeweils die in Anspruch 1 genannte Bedeutung besitzen.

**3.** Benzisothiazolazofarbstoffe gemäß Anspruch 1, dadurch gekennzeichnet, daß X für Wasserstoff, Chlor, Brom oder Cyano und K für den Rest der Formel II stehen, wobei $R^2$ Wasserstoff oder Methyl bedeutet und $R^1$ die in Anspruch 1 genannte Bedeutung besitzt.

**4.** Verwendung der Benzisothiazolfarbstoffe gemäß Anspruch 1 zum Färben von synthetischen Fasermaterialien.

## Claims

**1.** A benzisothiazole-azo dye of the formula I

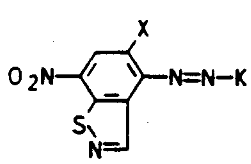

(I)

where
X is hydrogen, chlorine, bromine, cyano or nitro and K is a radical of the formula II or III

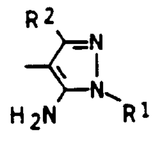

(II)

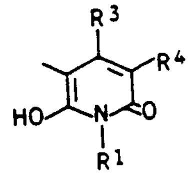

(III)

where

- $R^1$ is substituted or unsubstituted $C_1$-$C_{12}$-alkyl which may be interrupted by one or more oxygen atoms, substituted or unsubstituted phenyl, $C_3$-$C_5$-alkenyl or $C_5$-$C_7$-cycloalkyl,
- $R^2$ is hydrogen or $C_1$-$C_4$-alkyl,
- $R^3$ is hydrogen or methyl and
- $R^4$ is hydrogen, cyano or carbamoyl.

**2.** A benzisothiazole-azo dye as claimed in claim 1, wherein X is hydrogen, chlorine, bromine or cyano, $R^4$ is cyano and $R^1$, $R^2$ and $R^3$ are each as defined in claim 1.

**3.** A benzisothiazole-azo dye as claimed in claim 1, wherein X is hydrogen, chlorine, bromine or cyano and K is the radical of the formula II where $R^2$ is hydrogen or methyl and $R^1$ is as defined in claim 1.

**4.** The use of a benzisothiazole dye as claimed in claim 1 for dyeing synthetic fiber materials.

## Revendications

**1.** Colorants azoïques de la série des benzo-isothiazoles de formule I

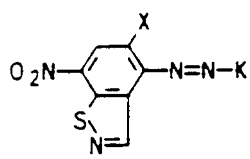

(I),

dans laquelle

X est mis pour un atome d'hydrogène, de chlore, de brome ou pour un groupement cyano ou nitro et K est mis pour un reste de formule II ou III

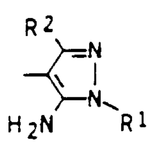

(II)

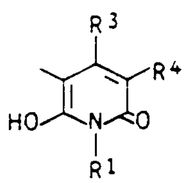

(III)

où

- $R^1$ représente un reste alkyle en $C_1$-$C_{12}$ éventuellement substitué qui peut être interrompu par un ou plusieurs atomes d'oxygène, un reste phényle éventuellement substitué, alcényle en $C_3$-$C_5$ ou cycloalkyle en $C_5$-$C_7$,
- $R^2$ représente un atome d'hydrogène ou un reste alkyle en $C_1$-$C_4$,
- $R^3$ représente un atome d'hydrogène ou un reste méthyle et
- $R^4$ représente un atome d'hydrogène ou un groupement cyano ou carbamoyle.

**2.** Colorants azoïques de la série des benzo-isothiazoles selon la revendication 1, caractérisés en ce que X représente un atome d'hydrogène, de chlore, de brome ou un groupement cyano et $R^4$ représente un groupement cyano, $R^1$, $R^2$ et $R^3$ ayant chacun la signification indiquée dans la revendication 1.

3. Colorants azoïques de la série des benzo-isothiazoles selon la revendication 1, caractérisés en ce que X est mis pour un atome d'hydrogène, de chlore, de brome ou pour un groupement cyano et K est mis pour le reste de formule II, $R^2$ représentant un atome d'hydrogène ou un reste méthyle et R' ayant la signification indiquée dans la revendication 1.

4. Utilisation des colorants azoïques de la série des benzo-isothiazoles selon la revendication 1 pour la teinture de matières en fibres synthétiques.